# Europäisches Patentamt
# European Patent Office
# Office européen des brevets

(19)

(11) Veröffentlichungsnummer: **0 171 398**
**B1**

(12)
# EUROPÄISCHE PATENTSCHRIFT

(45) Veröffentlichungstag der Patentschrift:
04.11.87

(51) Int. Cl.⁴: **B 29 C 45/30**

(21) Anmeldenummer: **85900615.7**

(22) Anmeldetag: **01.02.85**

(86) Internationale Anmeldenummer:
**PCT/CH 85/00015**

(87) Internationale Veröffentlichungsnummer:
**WO 85/03476 (15.08.85 Gazette 85/18)**

(54) **TRANSFER-DÜSE IN EINEM HEISSKANAL-WERKZEUG.**

(30) Priorität: **06.02.84 CH 558/84**

(43) Veröffentlichungstag der Anmeldung:
**19.02.86 Patentblatt 86/8**

(45) Bekanntmachung des Hinweises auf die Patenterteilung:
**04.11.87 Patentblatt 87/45**

(84) Benannte Vertragsstaaten:
**AT BE CH DE FR GB LI LU NL SE**

(56) Entgegenhaltungen:
**EP-A-0 099 089**
**CH-A-449 953**
**DE-A-3 143 748**
**FR-A-1 598 991**
**FR-A-2 394 231**
**US-A-4 212 625**

**Prospekt "Thermoplay type 5", Thermoplay(R)-Vertrieb, Parkring 49a, 6800 Mannheim**

(73) Patentinhaber: **STAUBER, Bernard, Bahnhofstrasse 41, CH- 8305 Dietlikon (CH)**

(72) Erfinder: **STAUBER, Bernard, Bahnhofstrasse 41, CH- 8305 Dietlikon (CH)**

(74) Vertreter: **White, William, Isler AG Patentanwalts-Bureau Walchestrasse 23, CH- 8006 Zürich (CH)**

LIBER, STOCKHOLM 1987

## Beschreibung

Die vorliegende Erfindung betrifft eine Transfer-Düse in einem Heisskanal-Werkzeug gemäss dem Oberbegriff des unabhängigen Patentanspruchs 1.

Bei Heisskanal-Werkzeugen für Kunststoff-Spritzgussmaschinen öffnet sich der Düsenmund direkt in den Formhohlraum. Dadurch werden Angussteile vermieden, die nach dem Erstarren des Spritzgussteils wieder entfernt werden müssen. Nachteilig ist, dass in einem gekühlten Werkzeugteil ein Kanal auf Schmelztemperatur des Kunststoffes gehalten werden muss. Aus der Praxis sind schon mehrere Ausführungsformen für Transfer-Düsen, die zwischen der Maschinendüse und dem Formhohlraum angeordnet sind, bekannt geworden.

Gemäss einer bekannten älteren Ausführungsform, die in der CH-A-578 417 beschrieben ist, wird der Düsenmund der Spritzdüse durch eine Kappe gebildet. Der Düsenkörper befindet sich in einer zentralen Bohrung und weist eine zwangsgesteuerte, in Verschlußstellung den Düsenmund verschliessende Düsennadel auf. Der Düsenkörper weist eine axiale Durchgangsbohrung für den Durchfluss des Spritzgutes auf.

Durch die Plastic Service GmbH in Mannheim wurden Heisskanaldüsen in verschiedenen Ausführungsformen in einer Datenblattsammlung für eine Produktegruppe 4.3 Heisskanalsystem "Thermoject" dargestellt. Dabei ist ein Düseneinsatz mit einem axialen aussermittig geführten Kanal für flüssiges Spritzgut versehen. Im zentralen Gebiet des Düsenkopfes befindet sich eine sogenannte Torpedospitze in Form eines allseits freien Kegels, dessen Spitze im Düsenmund angeordnet ist. Im Zentrum des Torpedos ist eine axial angeordnete zylindrische Heizpatrone vorhanden. Der Düsenkörper ist zudem mit einem äusseren Zusatzheizband versehen. Um die Wärmeabfuhr so gering wie möglich zu halsen, sind im Haltebereich des Werkzeugteils Lufttaschen gebildet, indem der Düsenkörper mittels Rippen genau zentriert gehaltert wird. Durch die axiale zentrische Anordnung der Heizpatrone müssen die Speiseleitungen seitlich herausgeführt werden und dies bedingt die aussermittige Anordnung des Kanals, und einen relativ grossen Düsenhohlraum im Bereich der Torpedospitze, um die allseits abgegebene Wärme zu nützen. An diesen Stellen kann aber eine hohe Temperatur entstehen und dort befindliches Spritzmaterial kann "verkochen". Zudem ist bei Arbeitsunterbrüchen relativ viel unbrauchbares Spritzmaterial in diesem Düsenhohlraum zu verflüssigen, was einen Energieverlust darstellt.

Eine Transfer-Düse gemäß dem Oberbegriff des Anspruchs 1 mit mehr als einem Düsenmund ist im Prospekt "Thermoplay type 5", "Thermoplay®-Vertrieb Dietlein u. Arras, Parkring 49a, 6800 Mannheim 1, dargestellt.

Es ist deshalb eine Aufgabe der Erfindung, die vorbeschriebenen Nachteile bei einer Heisskanal-Spritzdüse zu vermeiden. Erfindungsgemäss wird diese Aufgabe durch die Merkmale im kennzeichnenden Teil des unabhängigen Patentanspruchs 1 erreicht. Besonders vorteilhafte Ausführungsformen sind in den abhängigen Ansprüchen definiert.

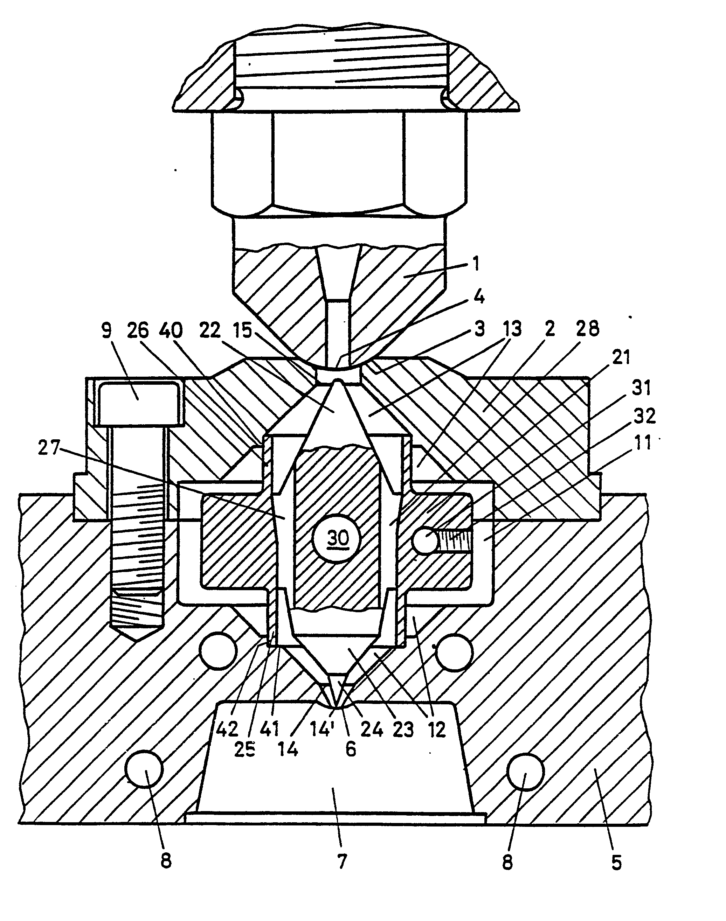

Nachfolgend wird ein Ausführungsbeispiel anhand der Zeichnung erläutert, in der eine Schnittansicht einer Transfer-Düse zwischen einer Maschinendüse und einem Werkzeugteil dargestellt ist.

Die Maschinendüse 1 ist zum Teil geschnitten und nur schematisch dargestellt, da diese Düsen jedem Fachmann bekannt sind. Die kalottenförmige Düsenpartie 4 ist in eine ebensolche Vertiefung 3 in einem Stützkorb 2 eingesetzt. Es ist selbstverständlich, dass die Maschinendüse 1 in bekannter Weise mit hydraulisch betätigten Druckelementen gegen den Stützkorb 2 gepresst wird.

Mittels mehrerer Bolzenschrauben 9 mit Inbus Schraubenkopf ist der mit mehreren Kühlkanälen 8 durchsetzte mit einem Formhohlraum 7 versehene Werkzeugteil 5 am Stützkorb 2 starr befestigt. Der Düsenmund 6 der Transfer-Düse öffnet sich in den Formhohlraum 7.

Ein Düsenhohlraum ist teils im Stützkorb 2 und teils im Werkzeugteil 5 gebildet und stellt sich als mittlerer zylindrischer Teil 11 mit axial an diesen anschliessenden und sich nach aussen verjüngenden Kegelstümpfen 12, 13 dar. Die Deckflächen 14, 14', 15 dieser Kegelstümpfe 12, 13 bieden einerseits die Öffnung zur Maschinendüse 1 und anderseits den Düsenmund 6 der Transfer-Düse. Wie zeichnerisch dargestellt, können die Übergangsstellen noch abgesetzt oder zylindrisch ausgebildet sein, um eine vorteilhafte Anschnittgeometrie zu bilden.

Die Ausbildungen dieser Übergangsstellen sind ihrerseits in Fachkreisen gut bekannt und sie sind massgebend für die Abrisshöhe am Spritzformling.

In diesem Düsenhohlraum 11, 12, 13 ist ein ähnlich ausgebildeter Düsenkörper eingesetzt, der aus einem scheibenförmigen zylindrischen Mittelteil 21 und beidseitig axial ausgerichteten Düsenkegeln 22, 23 zusammengesetzt ist. Auch hier ist die werkzeugseitige Kegelspitze in gleicher Weise wie der Kegelstumpf 14, 14' des Düsenhohlraumes, also eine auf einem Kegelstumpf 23 aufgesetzte Kegelspitze 24, ausgebildet.

Beide Düsenkegel 22, 23 sind bis zu einer bestimmten Höhe von einem hülsenförmigen Kragen 25, 26 umfasst, und innerhalb dieser Kragen 25, 26 sind vier auf einer Kreislinie verteilt angeordnete Durchgangsöffnungen 27, 28 vorhanden. Der scheibenförmige Mittelteil 21 ist mit einer radialen Sackbohrung 31 mit radialer Zutrittsbohrung 32 versehen. Eine radiale Durchgangsbohrung 30 dient zur Aufnahme einer Heizpatrone und in die Sackbohrung 31 kann ein Wärmefühler eingesetzt werden.

Zur Halterung des Düsenkörpers im Düsenhohlraum ist die Wandung des Kegelstumpfes 13 im Stützkorb 2 mit einer zylindrischen Führung 40 versehen und der Kegelstumpf 12 im Werkzeugteil 5 ist mit einer radialen Ringschulter 41 und axialer Führung 42 versehen. Damit ist der Düsenkörper mit dem einen hülsenförmigen Kragen 25 im Werkzeugteil 5 abgestützt und mit dem gegenüberliegenden hülsenförmigen Kragen 26 zentrisch geführt. Bei einer axialen Wärmeausdehnung kann sich deshalb die genaue Lage des Düsenkörpers im Düsenhohlraum nicht verändern.

Wie deutlich dargestellt ist, besitzt der hülsenförmige Kragen 26 einen grösseren Durchmesser als der gegenüberliegende Kragen 25. Damit kann erreicht werden, dass das aus der Maschinendüse 2 antretende Material den Düsenkörper gegen die Schulter 41 presst.

Durch diese beschriebene und zeichnerisch dargestellte Anordnung wird ein optimaler Wärmehaushalt erreicht. Der Düsenkörper 21, 22, 23 wird von innen her beheizt und kann einen gleichmässigen erwärmten Körper innerhalb des flüssigen Spritzmaterials bilden. Indem nur die äussersten Partien der Kragen 25, 26 an den gekühlten Partien von Werkzeugteil 5 und Stützkorb 2 anliegen, überträgt sich dieses Wärmegefälle nicht bis zu den Düsenkegeln 22, 23. Diese Kragen 25, 26 dichten den Düsenhohl 11 rund um den Mittelteil 21 ab und es kann kein Spritzmaterial in diesen Raum eintreten. Der übrige von Spritzmaterial ausgefüllte Raum der Kegelstümpfe bleibt durch die Düsenkegel 22, 23 erwärmt und das Material wird dauernd durch neu zufliessendes Material ersetzt. Es bleibt somit kein Material in einer derart ausgebildeten Transfer-Düse. Ein weiterer Vorteil einer solchen Anordnung ist die geringe Einbaulänge, die durch die radiale Anordnung der Heizpatrone wesentlich kürzer ist als bei einer axialen eingesetzten Heizpatrone.

Es könnten mehrere radial um eine Mittelachse des scheibenförmigen Mittelteils 21 angeordnete Düsenkegel vorgesehen sein. Der gesamte Düsenkörper könnte aus einem die Wärme gut leitenden Material bestehen oder es könnten wenigstens Seelen aus einem solchen Material bis zu den Düsenkegelspitzen eingelegt sein. Auch könnte eine andere Zahl von Durchgangsöffnungen als wie gezeigt deren vier, vorgesehen sein.

Es wäre auch möglich, die Düse in Mehrfachwerkzeugen einzusetzen; die Materialzufuhr würde in diesem Fall nicht direkt über die Maschinendüse 1 sondern über einen herkömmlichen Reisskanalverteiler erfolgen.

Im Ausführungsbeispiel wurde ein Düsenkörper mit nur einer Düsenspitze erläutert. Selbstverständlich lässt sich die Form des Düsenkörpers noch variieren und kann, wenn es die Umstände verlangen, zwei oder mehr nebeneinander angeordnete Kegelspitzen in je einem Düsenmund aufweisen.

## Patentansprüche

1. Transfer-Düse in einem Heisskanalwerkzeug für eine Kunststoff-Spritzgiessmaschine bei dem wenigstens ein Düsenmund (6) direkt in den Formhohlraum (7) mündet und in welchen Düsenmund (6) die kegelförmigen Spitze (24) eines beheizbaren Düsenkörpers angeordnet ist und welcher Düsenkörper (21, 22, 23) in einem Düsenhohlraum (11, 12, 13) zwischen dem den Anschluss zur Maschinendüse (1) bildenden Stützkorb (2) und dem einen die Einspritzdüse enthaltenden Werkzeugteil (5) angeordnet ist, dadurch gekennzeichnet, dass der aus einem zylindrischen beheizbaren Mittelteil (21) und axial an diesen enschliessenden Düsenspitze (23) und Angusskegel (22) bestehende Düsenkörper (21, 22, 23) mit die Düsenspitze (23) und den Angusskegel (22) wenigstens auf einem Teil ihrer Länge umfassenden hülsenförmigen Kragen (25, 28) versehen iet, die einerseits am Stützkorb (2) und anderseits am Werkzeugteil (5) abgestützt sind, dass ferner innerhalb der hülsenförmigem Kragen (25, 26) eine Anzahl ringförmig verteilt angeordnete axiale Durchgänge (27, 28) für den Kunststoff vorhanden sind, und dass im Mittelteil (21) des Düsenkörpers eine radiale Durchgangsbohrung (30) für die Aufnahme eines Heizelementes vorhanden ist.

2. Düse nach Patentanspruch 1, dadurch gekennzeichnet, dass zwischen den Wänden des Düsenhohlraumes (11) und den Aussenrandpartien des Düsenkörpers (21, 22, 23) ausserhalb der den Düsenkörper (21, 22, 23) am Stützkorb (2) und am Werkzeugteil (5) abstützenden hülsenförmigen Kragen (25, 26) ein wärmeisolierender Zwischenraum gebildet ist.

3. Düse nach Patentanspruch 2, dadurch gekennzeichnet, dass der eine Kragen (26) des Düsenkörpers (21, 22, 23) im Stützkorb (2) axial geführt ist und der andere Kragen (25) im Werkzeugteil (5) mit seiner Stirnkante auf einer ringförmigen Schulter (41) aufliegt.

4. Düse nach einem der Patentansprüche 1 bis 3, dadurch gekennzeichnet, dass der Durchmesser des in den Stützkorb (2) eingreifenden Kragens (26) grösser ist als derjenige des in das Werkzeugteil (5) eingreifenden Kragens (25).

## Claims

1. A transfer nozzle in a hot-channel tool for a plastics injection moulding machine, in which at least one nozzle mouth (6) opens directly into the mould cavity (7) and in the said nozzle mouth (6) the conical tip (24) of a heatable nozzle body is arranged and the said nozzle body (21, 22, 23) is arranged in a nozzle cavity (11, 12, 13) between the supporting cage (2) forming the connection to the machine nozzle (1) and the one part (5) of the tool containing the injection nozzle, characterized in that the nozzle body (21, 22, 23) consisting of a cylindrical heatable central part (21) and axially adjoining the latter a nozzle tip (23) and a sprue (22) is provided with sleeve-shaped collars (25, 26) embracing the nozzle tip (23) and the sprue (22) over at least part of their length, which are supported at one side on the supporting cage and at the other side on the part (5) of the tool, that further there is inside the sleeve-shaped collars (25, 26) a number of axial passages (27, 28) for the plastics arranged distributed in the form of a ring, and that in the central part (21) of the nozzle body there is bored a radial passage (30) for receiving a heater element.

2. A nozzle as in Claim 1, characterized in that between the walls of the nozzle cavity (11) and the outer edge portione of the nozzle body (21, 22, 23) outside the sleeve-shaped collars (25, 26) supporting the nozzle body (21, 22, 23) on the supporting cage (2) and on the part (5) of the tool a heat-insulating gap is formed.

3. A nozzle as in Claim 2, characterized in that the one collar (26) of the nozzle body (21, 22, 23) is guided axially in the supporting cage (2) and the other collar (25) rests in the part (5) of the tool with its end edge against an annular shoulder (41).

4. A nozzle as in one of the Claims 1 to 3, characterized in that the diameter of the collar (26) engaging in the supporting cage (2) is greater than that of the collar (25) engaging in the part (5) of the tool.

**Revendications**

1. Buse de transfert d'un moule à canal chauffant, pour une presse de moulage de matière plastique par injection dans laquelle au moins un nez de buse (6) débouche directement dans l'empreinte du moule (7), le sommet (24) conique d'un corps de buse susceptible d'être chauffé étant disposé dans le nez (6) et le corps de buse (21, 22, 23) étant disposé dans une cavité de buse (11, 12, 13) entre le berceau d'appui (2) formant le raccordement avec la buse de la presse (1) et l'une des parties du moule (5) contenant la buse d'injection, caractérisée en ce que le corps de buse (21, 22, 23), constitué de la partie médiane (21) cylindrique, susceptible d'être chauffée et d'un sommet de buse (23) et d'un cône d'injection (22) s'y raccordant axialement, est muni de collets (25, 26) en forme de douille, qui l'entourent au moins sur une partie de sa longueur, et qui s'appuient d'une part sur le berceau d'appui (2) et d'autre part sur la partie du moule (5), en ce qu'il est prévu, en outre, à l'intérieur des collets (25, 26) en forme de douille, un certain nombre de passages (27, 28) axiaux et répartis annulairement pour la matière plastique, et en ce que dans la partie médiane (21) du corps de buse est prévu un alésage (30) de réception d'un élément de chauffage.

2. Buse suivant la revendication 1, caractérisée en ce qu'entre les parois de la cavité de buse (11) et les parties marginales extérieures du corps de buse (21, 22, 23), un espace intermédiaire calorifuge est formé à l'extérieur des collets (25, 26) en forme de douille soutenant le corps de buse (21, 22, 23) sur le berceau d'appui (2) et sur la pièce de moule (5).

3. Buse suivant la revendication 2, caractérisée en ce que l'un des collets (26) du corps de buse (21, 22, 23) est guidé axialement dans le berceau d'appui (2) et l'autre collet (25) dans la partie du moule (5) repose, par son bord frontal, sur un épaulement (41) annulaire.

4. Buse suivant l'une des revendications 1 à 3, caractérisée en ce que le diamètre du collet (26) pénétrant dans le berceau d'appui (2) est supérieur à celui du collet (25) pénétrant dans la partie du moule (5).